# EUROPEAN PATENT APPLICATION

(11) **EP 2 316 893 A1**
(43) Date of publication of application: **04.05.2011**
(21) Application number: 09306026.7
(22) Date of filing: 28.10.2009
(51) Int. Cl.: C09D 5/00, C09D 5/03

(54) **Process for manufacture of powder coating compositions**

(71) Applicant: Dupont Powder Coatings France S.A.S., 42601 Montbrison Cedex (FR); E.I. DUPONT DE NEMOURS AND COMPANY, Wilmington DE 19898 (US)
(72) Inventor: Grawe, Thomas, 51371 Leverkussen (DE); Jones, Pip, 45657 Recklinghausen (DE); Rodriguez-Santamarta, Carlos, 08002 Barcelona (ES); van den Bosh, Guido, 3191 Hever-schiplaken (BE); Beal, Ludovic, 42330 Saint Bonnet les Oules (FR)
(74) Representative: DuPont Performance Coatings Biering/Blum/Kimpel

(57) **Abstract**

The present invention provides a process for manufacture of a powder coating composition, the process comprising the steps
a) providing at ambient temperature or increased temperature and, optionally, under shear conditions at least one solid component selected from the group consisting of at least one binder resin and, optionally at least one curing agent, and optionally, at least one pigment and/or extender and/or coating additive,
b) adding of at least one calibrated pigmented liquid, based on at least one pigment, to the mixture of step a) and dry-mixing, wherein the dry-mixing is provided under sub-atmospheric pressure in a range of 1 to 700 mbar, and under speed-controlled shearing with a mixer speed in a range of 100 to 5000 rpm, and at a temperature of the mixture between 15°C and Tg and/or Tm of the solid component(s) suitable not to soften or melt the solid components in the mixture and suitable to evaporate the liquid components of the calibrated pigmented liquid and to avoid building of a paste form of the mixture, and
c) processing the resulted dry-mixture to a final powder coating composition.

The process of the invention provides a powder coating composition providing precise colour of the coatings having a desired colour with high colour stability. The process of the invention provides a simple and efficient way to produce a pre-product based on the calibrated pigmented liquid wherein the calibrated pigmented liquid is homogeneously distributed over the solid raw material, for further processing to a powder coating composition.

## Description

### Field of the Invention

The invention refers to a process for manufacture of powder coating compositions providing highly reproducible colour strength and colour position accuracy in the final coating.

### Background of the Invention

Pigmented powder coating compositions that meet a customer's colour specifications require a labour-intensive multi-step approach during their preparation, for example, batch mixing, extrusion, further processing and coating of powder samples, measurements of colour and appearance, laboratory testing, adjustment of the raw materials and re-extrusion, milling and sieving. In general, it is difficult to achieve the desired colour without correction steps because of batch to batch pigment variability and equipment performance variability.

Known are methods to use liquid components and/or powder slurries, including pigments, to produce powder coating compositions. US-A 5998507 refers to a preparation method for a powder coating material by dispersing the components, including pigments, under addition of water and cooling to create particles. JP-A 62192471 discloses a process of preparing a liquid dispersion of a solvent, a pigment and a resin and drying of the liquid dispersion under reduced pressure and heat to result in powder coating particles.

Further, it is known to add particularly liquid pigment components to solid raw material of powder coatings.

WO 2006/047238 discloses the use of a liquid pigment dispersion in which a pigment is dispersed in a non-aqueous liquid resin, wherein a premix is prepared by mixing the pigment dispersion with other powder coating raw materials at high speed and with a content of the pigment dispersion in a range of 3 wt% to 10 wt% in the premix. Any solvent can be removed by drying methods, e.g. spray drying, for further handling of the pre-mix by extrusion.

WO 2007/087169 and WO 2007/140131 refer to aqueous dispersions of polymer-enclosed colour-imparting particles for incorporating into powder coating compositions. The aqueous dispersion of the polymer-enclosed colour-imparting particles and the dry material of the powder coating composition may be extruded together, at 80 to 150 °C, with a devolatilizing procedure to remove water and solvents. The aqueous dispersion of the polymer-enclosed colour-imparting particles may also be introduced to a mixture of dry material and water and then removing the water from the resulting mixture by known drying methods, prior further processing such as extrusion.

The mentioned approaches could cause problems with quality consistency including multiple intermediate colour checks and adjustments to the powder coating during processing. Therefore, there is a need to find an improved and simplified process to combine liquid and solid material providing powder coating particles having sufficiently uniform and desired colour.

### Summary of the Invention

The present invention provides a process for manufacture of a powder coating composition, the process comprising the steps
a) providing at ambient temperature or increased temperature and, optionally, under shear conditions at least one solid component selected from the group consisting of at least one binder resin and, optionally at least one curing agent, and optionally, at least one pigment and/or extender and/or coating additive,
b) adding of at least one calibrated pigmented liquid, based on at least one pigment, to the mixture of step a) and dry-mixing, wherein the dry-mixing is provided under sub-atmospheric pressure in a range of 1 to 700 mbar, and under speed-controlled shearing with a mixer speed in a range of 100 to 5000 rpm, and at a temperature of the mixture between 15°C and Tg and/or Tm of the solid component(s) suitable not to soften or melt the solid components in the mixture and suitable to evaporate the liquid components of the calibrated pigmented liquid and to avoid building of a paste form of the mixture, and
c) processing the resulted dry-mixture to a final powder coating composition.

The process of the invention provides a powder coating composition providing precise colour of the coatings having a targeted colour with high colour stability, and it is possible to offer efficient, small-batch manufacture of custom colours, whereby the colour and appearance of the final powder coating product are less sensitive to variations in process equipment geometry. The process of the invention provides a simple and efficient way to produce a pre-product based on the calibrated pigmented liquid wherein the calibrated pigmented liquid is homogeneously distributed over the solid raw material and dried, for further processing to a powder coating composition. An excessive energy input as well as forming of difficult to handle pastes or a softening/melting of the mixture can be avoided.

### Detailed Description of the Invention

The features and advantages of the present invention will be more readily understood, by those of ordinary skill in the art, from reading the following detailed description. It is to be appreciated that those certain features of the invention which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

Slight variations above and below the stated ranges can be used to achieve substantially the same results as values within the ranges. Also, the disclosure of these ranges is intended as a continuous range including every value between the minimum and maximum values.

The process of the invention comprising the steps a) to c) is suitable to homogeneously combine at least one calibrated pigmented liquid with the solid components of a powder coating composition. This can be done in easy-to-clean equipment based on, for example, small batches, if desired, with amounts in a range of, for example, 2 to 500 kg raw material (components) of the powder coating composition.

In step a) of the process of the invention at least one solid component of a powder coating composition is provided. It is also possible to provide more than one solid component.

The at least one solid component can be selected from the group consisting of at least one binder resin and, optionally at least one curing agent, and optionally, at least one pigment and/or extender and/or coating additive. The amount of the solid component(s) in step a) is depending on the final powder coating composition.

The solid component(s) in step a) can be provided at ambient temperature and pressure, but also under increased temperature. Ambient temperature means the temperature of the solid component(s), in a range of, for example, 10 to 25 °C. Ambient pressure means atmospheric pressure in a range of, for example, 900 to 1050 mbar, depending on altitude and weather. Increased temperature means the temperature of the solid component(s) in a range suitable not to soften or melt the solid component(s). The range of the increased temperature depends from the kind of solid component(s) and is below the glass transition temperature (Tg) and/or the melting temperature (Tm) of the solid components. In case of amorphous and/or semi-amorphous solid component(s) the increased temperature means a temperature below the glass transition temperature (Tg) of the solid component(s), for example, a temperature in a range of 30 to 100°C, preferably 30 to 60°C. In case of crystalline and/or semi-crystalline solid component(s) the increased temperature means a temperature below the melting temperature (Tm) of the solid components, for example, in a range of 50 to 200°C. In case of a mixture of different such kinds of solid component(s) the increased temperature must be determined to be below the Tg and Tm, suitable not to soften or melt the solid component(s).

The term Tg mentioned in this document is the glass transition temperature of the solid component(s) measured by means of differential scanning calorimetry (DSC) according to ISO 11357-2.

The term Tm mentioned in this document is the melting temperature of the solid component(s) measured by means of DSC at heating rates of 10 K/min according to DIN 53765-B-10.

The solid components in step a) can also be provided under vacuum at a sub-atmospheric pressure in a range of, for example, 1 to 500 mbar, preferably 1 to 200 mbar.

The solid component(s) in step a) can be processed under shear conditions as known in the art, for example, container mixing, double cone mixing, ribbon blending, drum mixing, or using a muller, a vertical orbiting screw mixer or a turbine, prior to or during the providing step a) of the invention. This can be done to produce a homogeneous mixture of the solid components. The mixture of the components in step a) may also optionally be dry-mixed as known in the art to reduce the particle size in order to increase the surface area of the solid components.

Preferred is the use of a mixing device suitable also for the addition and dry-mixing step b) of the process of the invention. The mixing device may contain high shear parts, for example, a high shear mixing head. The preferred mixer is a container mixer as known in the art.

The mixing speed of the mixer depends on the scale of the operation process in step a) and can be usually between, for example, 100 and 5000 rpm (revolutions per minute), preferably 200 to 2000 rpm. The solid components can be mixed for between 0 and 30 minutes, preferably 3 to 15 minutes, most preferably 3 to 10 minutes, before the addition of the least one calibrated pigmented liquid according to step b) of the invented process.

The solid components in step a) can be provided in the entire amount or in portions, the total amount being based on the final powder coating composition. It is possible to provide the at least one solid component in step a) in parts of the total amount and to add the further parts of the total amount of the at least one solid component after finishing step b) of the invention by pre-mixing prior to processing step c) of the invention. It is also possible to provide only one of the solid components in step a), and to add further solid components after finishing step b) of the invention by pre-mixing prior to processing step c) of the invention. All combinations of such processing are possible for the process of the invention. Preferred is to provide at least one solid component in step a) in the entire amount, the amount based on the final powder coating composition.

Conventional binder resins and curing agents known to a person skilled in the art may be used in step a) of the invention.

Examples of binder resins are polyester resins, urethane resins, polyester urethane resins, polyester epoxy resins, epoxy resins, (meth) acrylic resins, alkyd resins and melamine/urea/formaldehyde resins.

Suitable polyester resins may be either acid or hydroxyl functional, depending on the cross-linking chemistry used. For example, hydroxyl functional polyester resins may have a hydroxyl number in the range of, for example, 30 to 350 mg KOH/g resin, and carboxyl functional polyester resin may have an acid number in the range of, for example, 10 to 200 mg KOH/g resin. The polyesters may be produced in a conventional manner by reacting of one or more aliphatic, aromatic or cycloaliphatic di- or polycarboxylic acids, and the anhydrides and/or esters thereof with polyalcohols, as is, for example, described in D.A. Bates, The Science of Powder Coatings, volumes 1 & 2, Gardiner House, London, 1990, and as known by the person skilled in the art.

The term hydroxyl number in this document is defined as the number of mg of potassium hydroxide (KOH) which is equal to the number of mg acetic acid for acetalizing of 1 g of the resin, determined according to DIN 53240.

The term acid number in this document is defined as the mg of potassium hydroxide required to neutralise the acid groups of the polyester, described in DIN EN ISO 2114.

Suitable (meth)acrylic resins include, for example, copolymers prepared from alkyl(meth) acrylates with glycidyl(meth) acrylates and olefinic monomers; functionalized resins such as polyester (meth) acrylates , epoxy (meth) acrylates, urethane (meth) acrylates, glycidyl(meth) acrylates.

The term (meth) acrylic is respectively intended to mean acrylic and/or methacrylic.

Crystalline and/or semi-crystalline binder resins are also usable which have a Tm in the range of 50 to 200°C.

Preferred is the use of polyester resins, polyester urethane resins, polyester epoxy resins and/or (meth) acrylic resins. Particularly preferred is the use of polyester resins and/or (meth) acrylic resins.

The binder resins may comprise self cross-linkable resins containing cross-linkable functional groups known by a person skilled in the art. In this case, no curing agent needs to be used in the composition according to the invention.

The at least one curing agent (cross-linker) suitable for cross-linking with the binder resins are known by a person skilled in the art. Examples of curing agents are blocked cycloaliphatic, aliphatic or aromatic polyisocyanates; agents containing epoxy groups, such as, for example, triglycidyl isocyanurate (TGIC); polyglycidyl ethers based on diethylene glycol; glycidyl functionalized (meth) acrylic copolymers; agents containing amino, amido, (meth)acrylate and/or hydroxyl groups, for example hydroxyl alkylamide crosslinker, as well as vinyl ethers. Furthermore, conventionally curing agents such as, dicyanodiamide hardeners, carboxylic acid hardeners or phenolic hardeners are usable.

The content of the at least one binder resin can be in a range between 50 and 100 parts per weight, preferably, between 60 and 97 parts per weight, parts per weight based on binder resin and curing agent, depending on the cross-linking chemistry of the binder resin and curing agent.

Examples of pigments are colour-imparting and/or special effect-imparting pigments and/or fillers (extenders). Suitable colour-imparting pigments are any conventional coating pigments of an organic or inorganic nature considering their heat stability which must be sufficient to withstand the curing conditions of the powder coating composition of the invention. Examples of inorganic or organic colour-imparting pigments are titanium dioxide, micronized titanium dioxide, carbon black, iron oxide, azo pigments, and phthalocyanine pigments. Examples of special effect-imparting pigments are metal pigments, for example, made from aluminium, copper or other metals, interference pigments, such as, metal oxide coated metal pigments and coated mica. Examples of usable extenders are silicon dioxide, aluminium silicate, barium sulfate, calcium carbonate, magnesium carbonate and micronized dolomite. The pigments and/or extenders can be used in conventional amounts known to the person skilled in the art, for example, 0.1 to 40 weight %, based on the total weight of the final powder coating composition.

Common coating additives are agents known to a person skilled in the art. Examples are levelling agents, rheological agents such as highly dispersed silica or polymeric urea compounds, thickeners, for example, based on partially cross-linked, carboxy-functional polymers or on polyurethanes, defoamers, wetting agents, anticratering agents, degassing agents, thermolabile initiators, antioxidants and light stabilizers based on HALS (hindered amine light stabilizer) products, tribo-charging agents, accelerators, initiators, inhibitors and catalysts. The coating additives can be used in conventional amounts known to the person skilled in the art, for example, 0.01 to 10 weight %, based on the total weight of the final powder coating composition.

After providing of the solid component(s) in step a) the at least one calibrated pigmented liquid, based on at least one pigment, is added and dry-mixed according to step b) of the process of the invention. The amount of the at least one calibrated pigmented liquid added in step b) is depending on the final powder coating composition.

The calibrated pigmented liquid can be added at ambient temperature and pressure, but also under increased temperature, as described above for step a), followed by dry-mixing wherein the dry-mixing is provided under sub-atmospheric pressure and at the temperature as described below.

The calibrated pigmented liquid can also be added under sub-atmospheric pressure, in the range of 1 to 700 mbar, preferably 30 to 250 mbar, and at a temperature of the mixture between 15°C and Tg and/or Tm of the solid component(s), preferably between 20°C and a temperature 5°C below Tg and/or Tm, most preferably between 25°C and a temperature 10°C below Tg and/or Tm, suitable not to soften or melt the solid components in the mixture and to evaporate the liquid components, such as water and, if used, solvent of the calibrated pigmented liquid to provide a dry-mixture.

The term dry-mixture in this document means a mixture that contain water low enough to avoid making a paste form or a slurry form of the mixture, the terms paste form and slurry form as known to a person skilled in the art, see, for example, B.H. Kaye, Powder Mixing, Chapman and Hall, 1997.

The adding and dry-mixing of step b) is characterized by a specific processing regime of feeding of the at least one calibrated pigmented liquid into the at least one solid component of step a) and of shear conditions during adding and dry-mixing.

The adding of the calibrated pigmented liquid can be proceeded in portions of the liquid or as a continuous feed of the liquid.

The adding of the calibrated pigmented liquid is processed in such a way that the evaporation of water and, if used, solvent under the above mentioned sub-atmospheric pressure and temperature conditions during step b) is high enough to avoid building of a paste form of the mixture and to result into a dry-mixture. This can be done by modifying the addition rate of the calibrated pigmented liquid and/or by modifying the amount of portions of the calibrated pigmented liquid and/or by modifying the mixer speed in order to change the power input to the mixer.

The evaporation of water and, if used, solvent is endothermic and it provides an evaporative cooling effect on the mixture in step b). If the addition rate of the calibrated pigmented liquid is too high, there will be evaporative cooling in such a manner that the temperature of the mixture decreases, compared to the starting temperature of step b), and a paste of the mixture is formed. To avoid the building of a paste the at least one calibrated pigmented liquid can be added slower and/or in smaller portions to increase the temperature until the starting temperature of step b) is achieved. If the addition rate of the calibrated pigmented liquid is too low, there will be insufficient evaporative cooling and the temperature of the mixture increases, and this temperature increase indicates that the calibrated pigmented liquid should be added faster and/or in larger portions to decrease the temperature until the starting temperature of step b) is achieved. The mixer torque or mixing power draw can also be used to indicate whether more or less calibrated pigmented liquid should be added in step b), if small changes in the mixture properties for different water and solvent contents give changes in the mixer power draw. For that, the mixer torque or mixing power draw can be adjusted, that means, increased or decreased, compared to the starting mixer conditions in step b). Therefore, the temperature of the mixture and/or the torque and/or the power draw of the mixing motor can be measured at the starting phase of step b) as well as during the step b) to identify whether more or less calibrated pigmented liquid should be added in step b).

Other methods of tracking the water and, if used, solvent content of the mixture, for example, a mass balance or humidity detection as known in the art, may also be used.

The term starting temperature of step b) means the temperature of the mixture existing immediately before adding the at least one calibrated pigmented liquid in step b).

The term starting mixer conditions in step b) means the mixer conditions existing immediately before adding the at least one calibrated pigmented liquid in step b).

During the addition of the calibrated pigmented liquid, the temperature must remain low enough to avoid softening or melting of the solid mixture components. Therefore, the maximum allowable operating temperature will depend on the glass transition temperature Tg or the melting temperature Tm of the solid components as described above. If the temperature of the mixture is too high, for example because the rate of addition of the at least one calibrated pigmented liquid is too low, a portion of the calibrated pigmented liquid can be fed in and/or the feeding rate of the calibrated pigmented liquid can be increased and/or or the mixer speed can be adjusted in a way as described above.

The shear condition in step b) of the invention is processed in such a way that more than 30%, and preferably more than 70% of the energy required for evaporation of water and, if used, solvent is supplied by the shearing. This can be achieved by speed-controlled shearing under the temperature and pressure conditions as mentioned above for step b).

Speed-controlled shearing can be done by speed-controlled stirring of the components of the mixture during adding of the calibrated pigmented liquid and dry-mixing, by controlled power input to the mixer. The stirring can be processed at mixer speed in the range of 100 to 5000 rpm, preferably 200 to 2000 rpm, to provide an intense mixing of the components. The speed-controlled shearing heats up the mixture, and water and, if used, solvent can be evaporated. The geometry and arrangement of the mixer, particularly the mixing blades, can be optimised by someone skilled in the art to allow sufficient power input for fast evaporation. Preferred is the use of a container mixer with one or more mixing blades rotated using a high shear mixing head. The energy dissipation which occurs around the mixing blade(s) and in the dry- mixture through shear, particle collisions and particle compression is used for water and solvent evaporation as a fixed amount of energy, equal to the enthalpy of vaporization of the water and solvent. In this way, the speed-controlled shearing allows this energy to be put into the mixture more efficiently. This also allows sufficient overall mixing of the mixture while minimising poorly mixed regions and build-up of solid material (hot-spots) on the internal surfaces of the mixer container that would occur if only wall heating or radiation heating of the mixer were used.

The addition of the calibrated pigmented liquid in step b) of the invention can be processed in any region of mixing to distribute the calibrated pigmented liquid onto the surface of the particles of the mixed solid components. Preferred is the addition of the calibrated pigmented liquid into a region of intense mixing to maximise the rate of distribution of the liquid onto the particles' surface.

If more than one calibrated pigmented liquid is to be added in step b), the calibrated pigmented liquids can either be pre-mixed prior to addition or they can be added sequentially or in parallel without prior pre-mixing.

After addition of the calibrated pigmented liquid or liquids, the feeding line(s) for the liquid can be rinsed with a small amount of water or solvent to ensure that 100% of the planned fed amount goes into the dry-mixture. This extra amount of water or solvent can then evaporate, leaving a dry-mixture with exactly the desired amount of calibrated pigment provided by the at least one calibrated pigmented liquid.

The at least one calibrated pigmented liquid used in step b) of the invention can be a solvent-borne and/or a water-borne calibrated pigmented liquid, as solution and/or dispersion, comprising at least one pigment. Preferred is the use of at least one water-borne calibrated pigmented liquid.

The at least one calibrated pigmented liquid may contain at least one pigment, and may comprise at least one dispersant for stabilisation of the pigment in the liquid.

The calibrated pigmented liquids are produced in such a way that they have and provide a highly reproducible colour strength and well-defined colour information in order to provide a desired colour or defined colour specification of the coating based on the powder coating composition of the invention, independently of the used pigment or source of pigment, and independently of the further processing techniques based on different types of extruders or different extruder processing. This also means that a minimal amount of pigment is required and that the variations in the manufacturing process will not give differences in colour strength, as would occur if the powder coating formulation contains solid pigments or pigment agglomerate-containing liquids. For example, the extruder shear history, for example, by using different extruder geometries, will not affect the calibrated pigmented liquid nor change the final powder coating colour.

Calibrated pigmented liquids used in liquid coating businesses, thus referred to as "tints", can be used for this invention. The benefit of the calibration is that a recipe that uses these calibrated pigmented liquids will give a well-defined final coating colour when known masses or volumes of raw materials are mixed together, irrespective of the natural colour strength of the pigment used to formulate the calibrated pigmented liquids. The calibrated pigmented liquids have proven storage stability and can thus be manufactured in large volumes and easily stored at local manufacturing sites.

The calibrated pigmented liquids are processed to maximise the colour strength that the pigments can achieve, and the colour strength and colour position are adjusted to a defined colour specification by a combination of dilution and addition of pigments and, when required, of other colorants.

Colour strength and colour position can be described in terms of lightness (ΔL*), degree of red/green (Δa*) colour and degree of blue/yellow colour (Δb*) according to the CIE 1976 L*a*b* standard colour space, known to a person skilled in the art. Differences between the reference sample and a particular colour sample are shown as an absolute difference in L*, a* and b* and are written as ΔL*, Δa* and Δb*. ΔE* is the total relative error and is the deviation in lightness and colour position (red/green and blue/yellow offset) of the colour values of a reference sample. ΔE* can be calculated from ΔL*, Δa* and Δb* according to the formula Δ*E** = (Δ*L**² +Δ*a**² +Δ*b**²)^{1/2}_{.}

The at least one calibrated pigmented liquid contains between 0.5 and 80 weight % of at least one pigment, preferably between 3 and 50 weight % of at least one pigment, and may contain between 10 and 90 weight % of water and/or solvent, the weight % based on the calibrated pigmented liquid.

The at least one calibrated pigmented liquid may optionally contain at least one dispersant and other additive(s) to improve the stability of the calibrated pigmented liquid, for example by preventing agglomeration or settling of the dispersant, as well as to give other desired properties of the calibrated pigmented liquid, such as a desired mixture viscosity.

The at least one calibrated pigmented liquid can be prepared by combination of dilution and addition of pigment(s) and, when required, of other colorants, colorants known in the art. For that, a solid pigment is transferred into a pigment liquid by mixing, for example in a mill, with water and/or solvent, optionally containing the above mentioned dispersant and additive(s). The resulted pigment liquid provides a colour which can be determined by the above described CIE 1976 L*a*b* standard colour space method, and the colour is then adjusted (calibrated) to a defined colour specification. Such adjustment (calibration) can be carried out by addition of additional water and/or solvent and optionally additional additive(s), mentioned above, as well as optionally by addition, in a range of 0 to 20 weight %, based on the calibrated pigmented liquid, of other pigments and/or colorants, to result into the calibrated pigmented liquid.

Examples of pigments in the calibrated pigmented liquids are those as already mentioned above.

The at least one dispersant of the calibrated pigmented liquid can be a polymeric and/or non-polymeric dispersant as known in the art. The polymeric dispersant can be one or more resins formed by polymerisation and/or copolymerisation of monomers, particularly monomers having hydroxyl and/or acid functional groups, that lead to side groups along the polymer chain that stabilize the at least one pigment in the calibrated pigment liquid. The at least one polymeric dispersant can be resins having a sufficiently high glass transition temperature to give a stable final powder coating composition of the invention having little or no glass transition temperature modifiers. Examples of polymeric dispersants are resins formed by copolymerisation of hydrophobic and hydrophilic monomers. Preferred is the use of colourless polymeric dispersants.

It is preferred to use calibrated pigmented liquids that each contain a single pigment, but it is also possible to use calibrated pigmented liquids containing more than one pigment each, in order to either adjust the colour position of the calibrated pigmented liquid or to provide calibrated pigmented liquids with colour data that correspond to pre-defined colours, for example, different RAL colours. RAL colours mean the standard of the RAL (Reichsausschuss fuer Lieferbedingungen) Institute for colours, known to a person skilled in the art.

As a result of step b) of the invention a dry-mixture of particles can be received wherein the particles are prepared from the combination of the at least one solid component of step a) and the at least one calibrated pigmented liquid of step b). The completion of step b) can be identified from the mixture temperature during processing. After the water and, if used, solvent has evaporated, there is no longer an evaporative cooling effect in the dry-mixture. The dry-mixture temperature will start to increase. This temperature increase indicates that the dry-mixture preparation of step b) of the invention is completed. Other methods for monitoring water and solvent content may also be used to identify the completion of step b) of the process of the invention, for example, humidity measurement, tracking of the amount of evaporated water and solvent or spectroscopic methods, as such known in the art.

The resulted dry-mixture can directly be processed to a final powder coating composition according to step c) of the invention. No additional separation and/or classifying of the particles of the resulted dry-mixture are necessary.

Prior to step c) of the process of the invention the resulted dry-mixture can be optionally processed with at least one further component, preferably solid component, of the desired powder coating composition, that means component selected from the group consisting of binder resin, curing agent, pigment, extender and coating additive. This processing can be done by dry-mixing methods known in the art. Examples of such binder resin, curing agent, pigment, extender and/or coating additive can be those as already mentioned above.

Step c) of the process of the invention comprises the processing of the dry-mixture to a final powder coating composition. This can be done by manufacturing techniques used in the powder coating industry such as extrusion, at a temperature at which cross-linking (curing) does not occur.

In step c) the dry-mixture can be processed to the final powder coating composition, optionally, together with at least one further component selected from the group consisting of binder resin, curing agent, pigment, extender and coating additive. Examples of such binder resin, curing agent, pigment, extender and/or coating additive can be those as already mentioned above. Preferably, such further components are not used.

It is possible to remove some further content of water and/or solvent in the dry-mixture during the extrusion processing of step c), for example, by vacuum extrusion and other techniques known by a person skilled in the art. For example, this removable content of water and/or solvent can be in a range of 1 to 10 weight %, based on the total weight of the dry-mixture.

The extrusion process is known to a person skilled in the art. In the extruder the mixture is melted and homogenized at a temperature of the material in a range of, for example, 60 to 170°C, preferably 80 to 150°C. The extruded material is then cooled on chilled rolls and/or chilled bands and is broken up into pre-powder particles, which can be in the form of chips or pellets, followed by grinding to form a finely divided powder with a typical particle size for a coating powder, for example, an average particle size of 20 to 200 µm, preferably 30 to 60 µm.

The term average particle size mentioned in this document means the D90 value. The D90 value corresponds to a particle size below which 90 weight % of the particles lie, wherein the particle size analysis is done by a laser diffraction method and meets the standards set forth in ISO 13320-1. Measurements is done on a Malvern Mastersizer 2000.

The resulting finished powder coating composition is usable without any additional adjustment tests or re-working procedures. The liquid content, based on residue of water and/or solvent, of the final powder coating composition is in the range of 0 to 7 weight %, preferably below 3 weight %, most preferably below 2 weight %, based on the total weight of the final powder coating composition.

Furthermore, specific components of the powder coating composition, for example, coating additives, pigments, extenders, may be processed with the finished powder coating particles after extrusion and grinding by a "bonding" process using an impact fusion. For this purpose, the specific components may be mixed with the individual powder coating particles. During blending, the individual powder coating particles are treated to softening their surface so that the components adhere to them and are homogeneously bonded with the surface of the powder coating particles. The softening of the powder particles' surface may be done by heat treating the particles to a temperature, e.g. in the range of 40 to 100°C, dependent from the melt behaviour of the powder particles. After cooling the desired particle size of the resulted particles may be achieved by a sieving or classifying process.

The final powder coating composition manufactured by the process of step a) to c) of the present invention may be prepared from a combination, the combination comprising
A) at least one binder resin and, optionally at least one curing agent,
B) at least one calibrated pigmented liquid, based on at least one pigment, and,
C) optionally, at least one pigment and/or extender and/or coating additive.

The content of component B) in the combination used for preparation of the final powder coating composition depends on the colour strength of the calibrated pigmented liquid or calibrated pigmented liquids that are used and on the desired colour provided by the powder coating composition prepared from the combination.

In particular, the final powder coating composition is prepared from a combination, the combination comprising
A) 20 to 99.9 weight %, preferably 30 to 90 weight % and most preferably 40 to 80 weight %, of at least one binder resin and, optionally at least one curing agent,
B) 0.1 to 80 weight %, preferably 0.3 to 70 weight % and most preferably 0.5 to 45 weight %, of at least one calibrated pigmented liquid, based on at least one pigment, and,
C) 0 to 50 weight %, preferably 0.1 to 20 weight %, of at least one pigment and/or extender and/or additive,
   the weight % based on the total weight of the combination A) to C).

A pre-mixing of the components of the combination prior to the extrusion processing step c) can be done. For example, component A and C can be mixed together according to step a) of the invention, and component B is then incorporated into components A and C according to step b) of the invention. Also, for example, component B) can be incorporated into component A) according to step a) and b) of the invention, and the resulting dry-mixture can be pre-mixed with component C. Also, for example, component B) can be incorporated into component C) according to step a) and b) of the invention, and the resulting dry-mixture can be pre-mixed with component A. The pre-mixing can be done by methods known in the art, and can also be done, for example, by the bonding process described above.

The final powder coating composition of the invention may be applied by techniques known in the art to substrates, e.g., metallic substrates, non-metallic substrates, such as, paper, wood, plastics, glass and ceramics, including heat-sensitive substrates, and curing the applied composition.

The final powder coating composition of the invention may be applied as a one-coating system or as coating layer in a multi-layer film build, onto pre-heated or non-pre-heated substrates. The powder coating composition can be applied directly on the substrate surface, which can be a degreased substrate surface, or on a substrate pre-treated by techniques known in the art, such as chromating, other forms of chromium-free pre-treatment, phosphating or electroplating. The powder coating composition can be applied also on a layer of a primer which can be a liquid or a powder based primer, for example, a conductive primer in case of coating of non-conductive substrates made from wood or MDF (Medium Density Fibres).

The applied powder coating composition can be melted and cured by thermal energy. The coating layer may, for example, be exposed to convective, gas and/or radiant heating, e.g., infra red (IR) and/or near infra red (NIR) irradiation, as known in the art, to temperatures of, e.g., 100 to 300°C, preferably of 120 to 230°C for convective thermal curing and preferably 200 to 280°C for radiation heating processes (object temperature in each case). If the powder coating composition contains unsaturated resins and, optionally, photo-initiators the curing process should comprise a melting step using convective, conductive or radiation means, as described above, or a combination of them, and a polymerisation step by irradiation with high energy such as ultra violet (UV) or electron beam (EB) radiation. If the powder coating composition contains resins having thermally reactive functions together with resins having unsaturated functions, dual curing may be used which means a combination of curing with high energy irradiation and thermal curing, with methods described above.

The present invention is further defined in the following Examples. It should be understood that these Examples are given by way of illustration only. As a result, the present invention is not limited by the illustrative examples set forth herein below, but rather is defined by the claims contained herein below.

### Examples

### Example 1

### Preparation of a Calibrated Pigmented Liquid

A calibrated pigmented liquid is prepared from a solid violet pigment according to Table 1.

**Table 1:**

| | Violet Pigment sample |
|---|---|
| ΔL* | -0.24 |
| Δa* | -0.98 |
| Δb* | 1.06 |
| ΔE* | 1.46 |

The colour values of the solid violet pigment (Hostaperm-Violett RL Spezial, Clariant) are measured using the CIE 1976 L*a*b* standard colour space method as described above. The colour values are measured relative to a solid painted panel that is treated as the reference colour sample. The colour values are described in terms of lightness (L*), degree of red/green (a*) colour and degree of blue/yellow colour (b*) according to the CIE 1976 L*a*b* standard colour space method. Differences between the reference sample and a particular pigment sample are shown as an absolute difference in L*, a* and b* and are written as ΔL*, Δa* and Δb*. ΔE* is the total relative error and is the deviation in lightness and colour position (red/green and blue/yellow offset) of the colour values of a reference sample. ΔE* can be calculated from ΔL*, Δa* and Δb* according to the formula Δ*E** = (Δ*L**² +Δ*a**² +Δ*b**²)^{1/2}.

The solid violet pigment sample is first milled with 5 to 20 weight % water containing a polymeric dispersant, in a media mill. The material in the mill is processed until no further increase in colour intensity is possible. The colour of the resulted colour liquid (un-calibrated) is then measured and compared to a reference colour sample required for each particular calibrated pigment liquid (colour specification). For colour matching, to meet the colour specification, additional water and colourless stabiliser additive are then added to the colour liquid. The resulted calibrated pigmented liquid contains 80 to 90 weight % of water, based on the calibrated pigmented liquid. The colour value of this calibrated pigmented liquid is shown in Table 2.

**Table 2:**

| | Calibrated pigmented liquid based on pigment sample |
|---|---|
| ΔL* | 0.19 |
| Δa* | 0.25 |
| Δb* | 0.23 |
| ΔE* | 0.389 |

The colour value is measured as described above.

### Example 2

### Preparation of a Powder Coating Composition according to the Invention

A powder coating composition is prepared from the calibrated pigmented liquid described above.

4.5 kg of polyester Uralac P841 (supplied by DSM) was loaded into a container mixer and was mixed at 1500 rpm for 3.5 minutes to reduce the particle size of the polyester and increase the wettable surface area of the polyester. During mixing, the temperature in the mixer increased from 23°C to 47°C.

The stirrer speed was reduced to 830 rpm and then the calibrated pigmented liquid was added under vacuum, at 250 mbar, in five portions. Immediately after addition of the first portion, the temperature in the mixer dropped to below 40°C. Motor speed was controlled to keep the motor torque constant. The subsequent liquid portions were added whenever the temperature increased to 45°C. After the last portion and water rinse, the mixture was stirred until the temperature reached 47°C. Total processing time was 70 minutes.

The final, dried material was then mixed with crosslinkers and flow additives, the parts per weight of the components are shown in Table 3.

The mixture was extruded and the extrudate was milled to produce a coating powder with an average particle size of between 40 and 60 µm.

For measurement of the colour, the coating powder was sprayed onto a test panel and the panel was cured in an oven for 15 minutes at 180°C, giving a film thickness of between 60 and 80 µm. The colour values can be found in Table 3.

As it can be seen from Table 1 and Table 3 the use of the calibrated pigmented liquid has given a clear reduction in the colour deviation ΔE*, without any manual adjustment of the colour of the powder coating compositions, compared to the the pigment sample, proving that a desired colour can be matched using the calibrated pigmented liquid in the powder coating composition, without batch adjustment.

**Table 3:**

| | Powder Coating Composition 1 |
|---|---|
| Components | amounts in parts per weight |
| polyester URALAC P 841 (DSM) | 757.6 |
| curing agent PRIMID XL 552 (EMS Chemie) | 44 |
| flow additive RESIFLOW PV88 (Worlee Chemie) | 8.8 |
| BENZOINE | 2.4 |
| rheological additive LUVOTIX R (Lehmann&Voss) | 8 |
| wax additive | 6.4 |
| stabiliser additive IRGAFOS 126 (Ciba) | 8 |
| Titanium dioxide pigment TIPURE R706 dispersion (DuPont) | 285.13 |
| Calibrated pigmented liquid | 28.51 |
| Colour Values | |
| ΔL* | -0.18 |
| Δa* | 0.26 |
| Δb* | -0.33 |
| ΔE* | 0.457 |

The colour values are measured as described above.

### Example 3

### Preparation of a Powder Coating Composition according to Prior Art

### (Comparison)

The components of the powder coating composition given in Table 3 were mixed together. The resulting mixture is either a paste or a lumpy, sticky premix, depending on the particle size of the polyester resin. This was dried out, which takes more than one day. The final mixture was then extruded and milled under the conditions described in Example 2 to make a powder coating composition, although the process is slow and a noticeable amount of tint residue remains on the walls of the mixing container.

### Example 4

### Test Results

Key factors of the mixing processes in Example 2 and 3 are shown in Table 4.

**Table 4:**

| **Process** | **Example 2 (Invention)** | **Example 3 (Comparison)** |
|---|---|---|
| Mixing and processing time prior to extrusion | 30-90 minutes | 12-48 hours |
| Batch adjustment time | none | none |
| Easy-to-clean | yes | no |
| Forming a paste | no | yes |
| Sufficiently uniform colour | yes | no |
| Agglomeration | no | yes |
| Softening/melting of solid components | no | no |
| Loss of fine particles | minimal | no |
| | | |
| | | |

| | | |
|---|---|---|
| "minimal": <0.5% of the batch amount | | |

## Claims

1. A process for manufacture of a powder coating composition, the process comprising the steps
a) providing at ambient temperature or increased temperature and, optionally, under shear conditions at least one solid component selected from the group consisting of at least one binder resin and, optionally at least one curing agent, and optionally, at least one pigment and/or extender and/or coating additive,
b) adding of at least one calibrated pigmented liquid, based on at least one pigment, to the mixture of step a) and dry-mixing, wherein the dry-mixing is provided under sub-atmospheric pressure in a range of 1 to 700 mbar, and under speed-controlled shearing with a mixer speed in a range of 100 to 5000 rpm, and at a temperature of the mixture between 15°C and Tg and/or Tm of the solid component(s) suitable not to soften or melt the solid components in the mixture and suitable to evaporate the liquid components of the calibrated pigmented liquid and to avoid building of a paste form of the mixture, and
c) processing the resulted dry-mixture to a final powder coating composition,
the Tg measured by means of differential scanning calorimetry (DSC) according to ISO 11357-2 and the Tm measured by means of DSC at heating rates of 10 K/min according to DIN 53765-B-10.

2. The process according to claim 1 wherein the increased temperature of step a) is below the Tg and/or Tm of the solid components.

3. The process according to claim 1 and 2 wherein the shear conditions of step a) is processed with a mixing speed of the mixer in a range of 200 to 2000 rpm.

4. The process according to claims 1 to 3 wherein the sub-atmospheric pressure in step b) is in a range of 30 to 250 mbar.

5. The process according to claims 1 to 4 wherein the temperature of the mixture is between 20°C and a temperature 5°C below Tg and/or Tm of the solid component(s).

6. The process according to claims 1 to 5 wherein the adding of the at least one calibrated pigmented liquid in step b) is done by modifying the addition rate of the at least one calibrated pigmented liquid and/or by modifying the amount of portions of the calibrated pigmented liquid and/or by modifying the mixer speed.

7. The process according to claim 6 wherein the at least one calibrated pigmented liquid is added slower and/or in smaller portions to increase the temperature of the mixture.

8. The process according to claim 6 wherein the at least one calibrated pigmented liquid is added faster and/or in larger portions to decrease the temperature of the mixture.

9. A powder coating composition manufactured by the process of claims 1 to 8 from a combination, the combination comprising
A) at least one binder resin and, optionally at least one curing agent,
B) at least one calibrated pigmented liquid, based on at least one pigment, and,
C) optionally, at least one pigment and/or extenders and/or additive.

10. The composition of claim 9 wherein the combination comprising
A) 20 to 99.9 weight % of at least one binder resin and, optionally at least one curing agent,
B) 0.1 to 80 weight % of at least one calibrated pigmented liquid, based on at least one pigment, and,
C) 0 to 50 weight % of at least one pigment and/or extender and/or additive, the weight % based on the total weight of the combination A) to C).

11. A process of coating comprising the steps (1) applying the composition manufactured by the process of claim 1 to 8 onto a substrate, and (2) curing the applied composition.

12. A substrate coated with the composition manufactured by the process of claim 1 to 8.
